# EUROPÄISCHE PATENTANMELDUNG

(11) **EP 0 936 324 A2**
(43) Veröffentlichungstag der Anmeldung: **18.08.1999**
(21) Anmeldenummer: 99100721.2
(22) Anmeldetag: 15.01.1999
(51) Int. Cl.: E04F 15/12

(54) **Verfahren zur Erzeugung einer Kunststoffbeschichtung**

(30) Priorität: 11.02.1998 DE 19805617
(71) Anmelder: Remmers Bauchemie GmbH, D-49624 Löningen (DE)
(72) Erfinder: Doktors, Karin, 49770 Dohren (DE); Nosseler, Andreas Willi, 49828 Lage (DE)
(74) Vertreter: Herrmann-Trentepohl, Werner, Dipl.-Ing.

(57) **Zusammenfassung**

Die Erfindung betrifft ein Verfahren zur Erzeugung einer Kunststoffbeschichtung, die insbesondere für Böden und Wände mit Natursteineffekt verwandt werden kann und einen mehrschichtigen Aufbau mit einer Einstreuschicht aufweist, wobei in einem ersten Schritt eine Basisschicht aus einem thixotrop eingestellten aushärtenden Kunstharz erzeugt wird, in einem zweiten Schritt die Oberfläche der Basisschicht mit einer Struktur versehen wird, in einem dritten Schritt eine Einstreuschicht aus einem flächigen partikelförmigen Material aufgebracht wird und in einem vierten Schritt eine Deckschicht aus einem thixotrop eingestellten Kunststoff erzeugt wird, welche in einem fünften Schritt mit einer Oberflächenstruktur versehen wird.

## Beschreibung

Die Erfindung betrifft ein Verfahren zur Erzeugung von Kunststoffbeschichtungen mit mehrschichtigem Aufbau und einer Einstreuschicht. Das Verfahren kann insbesondere zur Erzeugung von Böden und Wänden mit Natursteineffekt eingesetzt werden.

Es ist seit langem bekannt, Oberflächen mit Kunststein zu belegen, die die Struktur natürlicher Steine aufweisen. Dabei kommen auch Kunstharzmassen zum Einsatz, mit denen sich aber bisher Natursteineffekte nicht immer zuverlässig erzeugen lassen.

Kunststoffbeschichtungen mit Natursteineffekt sind beispielsweise aus EP 0 781 732 A1 bekannt. Das dort beschriebene System ist insbesondere geeignet, Granitböden nachzustellen, wobei der Natursteineffekt durch die Einbringung mineralischer und synthetischer Komponenten in ein komplexes Harzsystem erzeugt wird. Die Erzeugung des Natursteineffekts hängt von der akkuraten Verarbeitung und der richtigen Verteilung der Zuschlagsstoffe in der Harzmatrix wie auch von der Teilchengröße der verwandten Zuschlagsstoffe und ihren optischen Eigenschaften ab. Das System ergibt ausgezeichnete Effekte, ist aber in der Verarbeitung recht aufwendig und nicht für jeden Zweck geeignet.

Des weiteren ist es bekannt, Effektböden aus Kunstharzschichten aufzubauen, in die Zwischenschichten aus Effektteilchen eingestreut werden. Solche Kunstharzböden, die beispielsweise aus mehreren Epoxyharzschichten, Kunststoffflittern und Deckschichten aufgebaut werden, neigen selbst bei richtiger Verarbeitung der Materialien zur Wolkenbildung und Ausbildung von ungleichmäßigen Strukturen. Ein gewisser Ausgleich kann durch die Anwendung mehrfacher Deckschichten erfolgen, die derartige optische Effekte kaschieren. Dies macht aber den Aufbau des Bodens zeitaufwendig, so daß es nicht immer möglich ist, die einzelnen Schichten innerhalb eines Tages aufzubringen. Die mehrfache Aufbringung der im allgemeinen höherwertigen Deckschicht verteuert im übrigen einen solchen Boden. Die Verteuerung bildet dabei einen gewissen Widerspruch zu den optisch nicht immer einwandfreien Produkten.

Der Erfindung liegt somit das Problem zugrunde, Wolkenbildungen und ungleichmäßige Strukturen bei Kunststoffbeschichtungen, insbesondere Kunststoffböden mit Natursteineffekt, zu vermeiden, um einen raschen Aufbau eines Bodens zu ermöglichen und ein optisch einwandfreies Produkt zu erzielen.

Diese Aufgabe wird mit einem Verfahren der eingangs genannten Art gelöst, bei dem in einem ersten Schritt eine Basisschicht aus einem thixotrop eingestellten aushärtenden oder trocknenden Kunstharz erzeugt wird, in einem zweiten Schritt die Oberfläche der Basisschicht mit einer Struktur versehen wird, in einem dritten Schritt eine Einstreuschicht aus einem flächigen partikelförmigen Material aufgebracht wird und in einem vierten Schritt eine Deckschicht aus einem thixotrop eingestellten Kunststoff erzeugt wird, welche in einem fünften Schritt mit einer Oberflächenstruktur versehen wird.

Die Erfindung betrifft ferner eine Kunststoffbeschichtung, insbesondere für Böden und Wände mit Natursteineffekt, die aus einzelnen mit einer Oberflächenstruktur versehenen Schichten mit einer Einstreuschicht besteht, und nach dem vorstehend genannten Verfahren aus thixotrop eingestellten Kunststoffharzen erhältlich ist.

Die Basis- und/oder Deckschicht der erfindungsgemäß erzeugten Kunststoffbeschichtungen bestehen zweckmäßigerweise aus üblichen Epoxy-, Acrylat-, Methacrylat- oder Polyurethanharzen. Besonders bevorzugt ist die Verwendung von Zweikomponentensystemen, insbesondere Zweikomponenten-Epoxyharzen, beispielsweise Bisphenol-A-Harzen und üblichen Aminhärtern.

In einzelnen Fällen ist es vorteilhaft, bei dem erfindungsgemäßen Verfahren auf die strukturierte Deckschicht eine Versiegelungsschicht aufzubringen. Diese Versiegelungsschicht wird zweckmäßigerweise ebenfalls aus einem thixotrop eingestellten Kunstharz erstellt und mit einer strukturierten Oberflächen versehen. Es können die gleichen ein- oder zweikomponentigen Harze verwandt werden, wie für die Basis- oder Deckschicht. Besonders bevorzugt ist aber die Verwendung eines lichtbeständigen Polyurethanharzes auf Basis aliphatischer Polyisocyanate, insbesondere auf Basis von Hexamethylendiisocyanat. Aliphatische Polyisocyanate sind lichtbeständig und vergilbungsfrei. Als Polyurethanharze werden zweckmäßigerweise solche verwandt, die feuchtigkeitshärtend sind und über die vorhandene Luftfeuchtigkeit aushärten können.

Als Thixotropierungsmittel kommen beliebige Thixotropierer in Frage, beispielsweise hochdisperse Kieselsäure, Bentone, Quarzmehl, Cellulosefasern und dergleichen. Solche Stellmittel werden im allgemeinen in einer Menge von 0,5 bis 5 Gew.-%, bezogen auf die Kunstharzmasse, eingesetzt. Besonders bevorzugt sind Mengen von 1 bis 3 Gew.-% hochdisperser Kieselsäure.

Die strukturierte Oberfläche wird im allgemeinen mit einer Strukturwalze erzeugt, beispielsweise einer mit einem Vlies bespannten Walze, einer Loch-, Stachel- oder Gitterwalze.

Als Einstreuschicht wird ein flächiges, partikelförmiges Material mit beispielsweise einer Teilchengröße bis zu 2 mm und einer Teilchendicke von bis zu 0,5 mm. Solche flitterförmigen Teilchen können gefärbt sein und werden im allgemeinen, je nach gewünschtem Effekt, als Mischung verschiedener Farbtöne und Teilchengröße eingebracht. Besonders bevorzugt sind Kunststoffflitter aus Polyvinylacetat, Polyvinylchlorid oder Polyester. Es können auch Glasflitter, Metallflitter, mineralische Flitter oder Plättchen - etwa Plastorit - oder farbige Kunstharzflocken eingesetzt werden. Das flächige partikelförmige Einstreumaterial wird im allgemeinen satt aufgetragen, so daß eine optisch durchgehende Schicht entsteht.

Im allgemeinen wird so vorgegangen, daß auf die vorbereitete Fläche, die also gegebenenfalls vorgrundiert oder ausgeglichen wurde, eine Basisharzschicht zur Aufnahme des Einstreumaterials aufgebracht wird. Die Basisschicht besteht aus einem thixotrop eingestellten, schwach oder gar nicht vergilbenden, pigmentierten oder unpigmentierten Kunstharz. Das Harz wird gleichmäßig verteilt und mit einer Kunststoffrolle gleichmäßig strukturiert. Diese Struktur bleibt auch nach dem vollsatten Abstreuen mit den Flocken bestehen. Dadurch, daß das Harz thixotrop ist, werden die Flocken zwar eingebunden, sie sinken jedoch nicht durch die Harzschicht hindurch. Eine Sedimentation wird somit zuverlässig vermieden. Das thixotrope Harz kann auch nicht durch die Kapillaren zwischen den Flocken aufsteigen. Somit entsteht eine gleichmäßige Schichtdicke, wobei Wolkenbildung durch die Flocken oder Flitter wird vermieden.

Nach Erhärten der Basisschicht wird der Flocken- oder Flitterüberschuß entfernt. Hierzu eignen sich verschiedene Geräte oder Werkzeuge, wie sie in der Branche üblich sind. Anschließend werden die Flocken oder Flitter fixiert, indem sie mit einem transparenten, schwach oder gar nicht vergilbenden Kunstharz als Deckschicht gebunden werden. Auch dieses Harz ist thixotrop eingestellt. Es wird gleichmäßig aufgebracht und mit einer Kunststoffrolle gleichmäßig strukturiert.

Durch diese Vorgehensweise des Strukturierens des thixotropen Harzes beider Schichten entsteht eine gleichmäßige Struktur und ein gleichmäßiger Glanzgrad. Eine Wolkenbildung durch die Einstreumaterialien ist praktisch ausgeschlossen. Die Oberfläche wirkt durch die bewußt herbeigeführte gestreute Reflexion des Lichtes sehr gleichmäßig und erinnert an gehauenen oder gespaltenen Naturstein. Als Abschluß kann noch eine weitere Versiegelung mit einem transparenten Kunstharz erfolgen. Diese Versiegelung kann sowohl matt als auch glänzend sein. Auch dieses Material ist vorzugsweise thixotrop eingestellt und wird mit einer Oberflächenstrukturierung versehen.

Die Verwendung einer thixotrop eingestellten Kunstharzmatrix hat zur Folge, daß das System nach dem Ausbringen einfriert und die erzeugte Oberflächenstrukturierung damit nicht mehr verliert. Die Thixotropierung bewirkt ferner, daß das Einstreumaterial an der Oberfläche bleibt und allenfalls geringfügig eindringt. Eine Sedimentation findet nicht statt. Dieser Vorteil gilt für alle thixotrop eingestellten Schichten mit strukturierter Oberfläche.

### Beispiel:

Ein erfindungsgemäßer Fußbodenbelag mit einer Basis-, Einstreu-, Deck- und Versiegelungsschicht wird aus folgenden Materialien erstellt:

Für die Basis- und die Deckschicht wird ein aminhärtendes 2K-Epoxidharz als Bindemittel verwandt, das mit 2 Gew.-% Thixotropiermittel (hochdisperse Kieselsäure) versetzt ist. Das Bindemittel wird in der Basisschicht in einer Menge von 0,30 kg/m² verwandt. Der Auftrag erfolgt mit einem Spachtel. Die noch frische Schicht wird mit einem üblichen Porosenroller im zweifachen Kreuzgang gleichmäßig strukturiert.

Unmittelbar nach dem Strukturieren werden handelsübliche Sedimentflocken auf PVAc-Basis in einer Menge von 0,70 kg/m² mit einer Flockenpistole eingestreut.

Auf die Einstreuschicht wird erneut eine Harzschicht in einer Menge von 0,30 kg/m² aufgebracht und im Kreuzgang strukturiert, wie zuvor. Nach dem Aushärten wird eine Versiegelungsschicht aus einem feuchtigkeitshärtenden Vergilbungsfreien Polyurethanharz, das wie vor thixotrop eingestellt ist, in einer Menge von 0,10 kg/m² aufgebracht und wie vor strukturiert.

Der Boden ist bei 20°C nach 18 Stunden begehbar und nach 7 Tagen voll belastbar.

## Patentansprüche

1. Verfahren zur Erzeugung einer Kunststoffbeschichtung, insbesondere für Böden und Wände mit Natursteineffekt, mit mehrschichtigem Aufbau und einer Einstreuschicht, **dadurch gekennzeichnet,**
daß in einem ersten Schritt eine Basisschicht aus einem thixotrop eingestellten aushärtenden Kunstharz erzeugt wird, in einem zweiten Schritt die Oberfläche der Basisschicht mit einer Struktur versehen wird, in einem dritten Schritt eine Einstreuschicht aus einem flächigen partikelförmigen Material aufgebracht wird und in einem vierten Schritt eine Deckschicht aus einem thixotrop eingestellten Kunststoff erzeugt wird, welche in einem fünften Schritt mit einer Oberflächenstruktur versehen wird.

2. Verfahren nach Anspruch 1, dadurch gekennzeichnet, daß für die Basis- und/oder Deckschicht ein Epoxy-, Acrylat-, Methacrylat- oder Polyurethanharz verwandt wird.

3. Verfahren nach Anspruch 1 oder 2, dadurch gekennzeichnet, daß auf die strukturierte Deckschicht eine Versiegelungsschicht aufgebracht wird.

4. Verfahren nach Anspruch 3, dadurch gekennzeichnet, daß die Versiegelungsschicht aus einem thixotrop eingestellten Kunstharz erzeugt und mit einer Oberflächenstruktur versehen wird.

5. Verfahren nach wenigstens einem der Ansprüche 3 bis 6, dadurch gekennzeichnet, daß die Versiegelungsschicht aus einem lichtbeständigen Polyurethanharz aus feuchtigkeitshärtenden aliphatischen Polyisocyanaten erstellt wird.

6. Verfahren nach einem der vorstehenden Ansprüche, dadurch gekennzeichnet, daß die Basis- und/oder Deckschicht aus einem Zweikomponenten-Epoxyharz hergestellt wird.

7. Verfahren nach einem der vorstehenden Ansprüche, dadurch gekennzeichnet, daß als Thixotropierungsmittel hochdisperse Kieselsäure in einer Menge von 0,5 bis 5 Gew.-%, bezogen auf die Kunstharzmasse, verwandt wird.

8. Verfahren nach einem der vorstehenden Ansprüche, dadurch gekennzeichnet, daß die Oberflächenstruktur mit einer Strukturwalze erzeugt wird.

9. Verfahren nach einem der vorstehenden Ansprüche, dadurch gekennzeichnet, daß die Einstreuschicht aus flächigen Kunststoffflittern besteht, die auf die Oberfläche der Basisschicht satt aufgestreut werden.

10. Verfahren nach einem der vorstehenden Ansprüche, dadurch gekennzeichnet, daß die Kunststoffbeschichtung eine Gesamtdicke von 1,5 bis 5 mm, vorzugsweise etwa 2 mm aufweist.

11. Kunststoffboden, erhältlich mit dem Verfahren eines der Ansprüche 1 bis 10, aufgebaut aus einzelnen Schichten mit strukturierter Oberfläche, erhältlich nach dem Verfahren eines der Ansprüche 1 bis 10 unter Verwendung von thixotrop eingestellten Kunstharzabmischungen.
